# EUROPÄISCHE PATENTSCHRIFT

(11) **EP 2 019 176 B1**
(45) Veröffentlichungstag und Bekanntmachung des Hinweises auf die Patenterteilung: **16.09.2015**
(21) Anmeldenummer: 08013217.8
(22) Anmeldetag: 23.07.2008
(51) Int. Cl.: E04D 3/36, E04F 13/08, F16B 13/00

(54) **Befestigungselement**
Fastening element
Elément de fixation

(30) Priorität: 27.07.2007 DE 202007010563 U
(43) Veröffentlichungstag der Anmeldung: 28.01.2009
(73) Patentinhaber: KEW Kunststofferzeugnisse GmbH Wilthen, 02681 Wilthen (DE)
(72) Erfinder: Gedan, Eberhard, 02689 Sohland (DE); Mager, Heiko, 01904 Neukirch (DE); Steglich, Maik, 02681 Schirgiswalde (DE)
(74) Vertreter: Sperling, Thomas

(56) Entgegenhaltungen:
- DE-U1- 20 019 566
- DE-U1- 20 021 397
- GB-A- 2 201 368

## Beschreibung

Die Erfindung betrifft ein Befestigungselement, insbesondere zum Befestigen von wärme- und/oder schallisolierenden Dämmmaterialien und Dichtungsbahnen an einer Unterkonstruktion, wie Mauerwerk, Beton, Holz, Metall, Kunststoff. Das Befestigungselement umfasst eine Platte und ein Befestigungsmittel, wie Schraube, Nagel, Dübel und dergleichen, wobei die Platte mittels des Befestigungsmittels an einem Untergrund befestigbar ist. Die Platte enthält Bohrungen unterschiedlicher Größen und/oder Formen für die Aufnahme bzw. zum Durchführen unterschiedlicher Befestigungsmittelarten.

Aus der Praxis und der einschlägigen Literatur sind verschiedene Befestigungsvorrichtungen, Befestigungselemente, Dämmstoffhalter zum Befestigen von unterschiedlichen Materialien, wie Dämmstoffe, Isolationsmaterialien, Dach- und Dichtungsbahnen, Folien an Unterkonstruktionen, wie Beton, Mauerwerk, Holz bekannt. Je nach Verwendungszweck kommen u. a. Dübel mit großflächigen Kopfteilen und die Hülse verschließbaren Deckelteilen zum Einsatz, um insbesondere das metallische Spreizelement vor Feuchtigkeit zu schützen. Des Weiteren sollen Wärme- bzw. Kältebrücken und damit verbundene Energieverluste vermieden werden.

Beispielsweise beschreibt das Gebrauchsmuster G 91 10 068 ein Befestigungselement für Isolierelemente mit einer Druckplatte, einem Dübel und einem Spreizelement, wobei zur Abdeckung des Kopfes des Spreizelementes ein Deckel einstückig an der Druckplatte ausgebildet ist.

Die DE 196 19 318 betrifft ein Dämmstoffbefestigungselement mit einem großflächigen Kopf und einem von diesem abragenden Hohlschaft, wobei der Innenraum des Hohlschaftes von wenigstens einem am Kopf angeordneten, um eine außerhalb der Öffnung liegenden Gelenkachse schwenkbaren Deckel verschließbar ist.

In der DE 200 21 397 wird ein Dübel mit einem angeformten topfförmigen Kopfteil und Klappdeckel beschrieben.

Aus der EP 0 723 053 ist ein Befestigungselement zur Befestigung von Isolierelementen mit einer Druckplatte bekannt, wobei die Druckplatte mit Durchbrüchen versehen ist und im Bereich der Durchbrüche Stege angeformt sind, die zur Innenseite der Druckplatte hin über diese vorstehen. Diese auf der Außenfläche der Dämmplatte aufsitzende Druckplatte wird mittels eines Dübels an dem Bauteil befestigt und damit die Dämmplatte gegen Windsogkrafte gesichert.

Die DE 199 57 820 betrifft einen kreisförmigen Befestigungsteller für die Befestigung von Isoliermaterial an einem Bauuntergrund unter Verwendung eines Dübels, wobei der Befestigungsteller zentral mit einer Ausnehmung zur Durchführung des Dübels versehen ist.

Die DE 200 19 566 beinhaltet ein Befestigungselement für Dämmplatten mit einem Aussparungen aufweisenden Halteteil in rhombischer Grundform, welches mittels einer Schraube oder eines Dübels an einem Bauteil befestigbar ist und eine großflächige Verspannung der Dämmplatten, insbesondere auch im Randbereich ermöglichen soll.

Aus der DE 100 12 2001 geht ein rechteckiges Halteteil hervor, dass an den Ecken gelenkig miteinander verbundene Streben aufweist und nach allen Richtungen zu einem Parallelogramm verschiebbar ist. Mindestens zwei der sich gegenüberliegenden äußeren Streben sind mit einer weiteren Strebe verbunden, die durch die Mitte des Halteteils verläuft. Die mittlere Strebe ist mit einem Dübel verbunden, über den das Halteteil an einem Bauteil befestigbar ist, wodurch die Bildung großflächige Halteteile mit einer Anpassmöglichkeit an unterschiedliche Bedingungen erreichbar ist. Die sich auf dem Markt befindenden scheibenförmigen Halteelemente, wie Druckplatten, Befestigungsteller unterschiedlicher Größenordnungen und Geometrie weisen analog den beschriebenen Ausführungen eine einzige zentrale Bohrung bzw. Einführöffnung mit unterschiedlichem Außen- und Innendurchmesser für das jeweilige einzubringende Befestigungsmittel, wie Dübel mit Nagel oder Dübel mit Schraube oder Schraube auf. Alle bekannten Befestigungssysteme haben den Nachteil, dass sie nur für eine einzige Befestigungsmittelart, z.B. für einen Dübel mit Nagel oder Dübel mit Schraube und nur für einen spezifischen Untergrund bzw. eine Unterkonstruktion einsetzbar sind. Ferner ist nachteilig, dass sich infolge der benötigten Vielzahl von Haltetellem der Aufwand für die Lagerhaltung erhöht.

Die deutsche Gebrauchsmusterschrift DE 20019566 IM offenbart ein Befestigungselement für Dämmplatten mit einem Aussparungen aufweisenden Halteteil, das mittels einer Schraube oder eines Dübels an einem Bauteil befestigbar ist. Das Halteteil weist eine rhombusformige Außenkontur und mindestens zwei in der Mitte des Halteteils sich kreuzende Stege auf.

Die deutsche Gebrauchsmusterschrift DE 20021397 IM offenbart einen Dübel aus Kunststoff, insbesondere zur Befestigung von Isolations- und Dämmelementen an Mauerwerk mittels eines Befestigungselementes, mit einem Dübelschaft. Der Dübel umfasst einen axialen Durchgang, an dessen erstem Ende ein umfangmäßiger Spreizbereich ausgebildet ist und an dessen offenem zweiten Ende ein topfförmiger Kopfteil angeformt ist, der einen Klappdeckel zum Verschließen der Öffnung des axialen Durchganges trägt, wobei der Klappdeckel (30) und dertopfförmige Kopfteil zusammengreifende Rastelemente aufweisen.

Die britische Patentanmeldung GB 2201368 A offenbart eine Befestigungsvorrichtung mit einem Körper, der dazu ausgebildet ist, direkt auf einem Wandabschnitt befestigt zu werden. Die Befestigungsvorrichtung umfasst zumindest zwei Führungslöcher. Die Führungslöcher sind relativ zur Senkrechten auf dem Wandabschnitt geneigt.

Der Erfindung liegt die Aufgabe zugrunde, ein Befestigungselement zu schaffen, das universell für unterschiedliche Materialien an verschiedenen Untergründen sowie für unterschiedliche Befestigungsmittelarten einsetzbar ist. Des Weiteren soll das Befestigungselement leicht zu montieren und kostengünstig sowie materialsparend herstellbar sein. Ferner soll das Befestigungselement das Eindringen von Kondenswasser unterbinden und den Lagerhaltungsaufwand reduzieren.

Erfindungsgemäß wird die Aufgabe mit den Merkmalen des 1. Anspruches dadurch gelöst, dass das Befestigungselement 1, insbesondere zum Befestigen von wärme- und/oder schallisolierenden Dämmmaterialien und Dichtungsbahnen, Folien und Gittergeweben an einer Unterkonstruktion, wie Mauerwerk, Beton, Holz, Metall, Kunststoff eine Platte und ein Befestigungsmittel, wie Schraube, Nagel, Dübel und dergleichen umfasst, und wobei die Platte mittels des Befestigungsmittels an einem Untergrund befestigbar ist, und dass die Platte 10 Bohrungen 11 - 14; 12a - 14a; 12b - 15b unterschiedlicher Größen und/oder Formen für die Aufnahme bzw. zum Durchführen unterschiedlicher Befestigungsmittelarten 20 - 24 enthält.

Mit der Erfindung wird im Anwendungsfall ein universell einsetzbares Befestigungselement erreicht, welches sowohl für harte als auch weiche Materialien, vorzugsweise Dämmstoffvarianten einsetzbar ist. Das erfindungsgemäße Befestigungselement ist durch seine Geometrie sowohl als Träger für Putzfassaden als auch zur Befestigung von Folien, Kunststoff- und Drahtgeweben an einem Untergrund im Innen- und Außenbereich hervorragend geeignet und reduziert die Lagerhaltung.

Vorteilhafte Weiterbildungen und Ausgestaltungen der Erfindung sind den kennzeichnenden Merkmalen der Unteransprüche, den Zeichnungen und den Ausführungsbeispielen entnehmbar.

Eine vorteilhafte Ausgestaltung der Erfindung sieht vor, dass eine der Bohrungen in der geometrischen Mitte der Platte für das Einführen einer Holz- oder Spanplattenschraube oder eines Nagels angeordnet ist, und dass weitere Bohrungen um die in der geometrische Mitte der Platte angeordnete Bohrung verteilt angeordnet sind, wodurch unterschiedliche Ausführungen von Befestigungsmitteln, wie Dübel mit Schraube (Schraubendübel) oder Dübel mit Nagel (Nageldübel) und dergleichen in einer einzigen Platte realisierbar sind und eine gute Anpassmöglichkeit an unterschiedliche Untergründe erreichbar ist.

Die Erfindung schlägt vor, dass die Bohrungen auf einer Kreislinie angeordnet sind, und dass die Bohrungen im Wesentlichen um den geometrischen Mittelpunkt der Platte verteilt angeordnet sind.

Es ist zweckmäßig, die Bohrungen mit Senkungen zu versehen, um ein Befestigungsmittel mit einem Kopf vollständig aufnehmen zu können.

Nach einem weiteren Vorschlag der Erfindung ist die Unterseite der Platte im Wesentlichen eben ausgebildet, wodurch ein ebener Abschluss mit dem Dämmmaterial erreichbar ist.

Die Erfindung sieht vor, dass die Platte im wesentlichen dreieckförmig ausgebildet ist, und dass die Seiten der Platte von bogenförmigen Plattensegmenten überspannt sind zwecks Erhalt einer gleichmäßigen Auflagefläche um den Plattensegmentmittelpunkt, und wobei sich die bogenförmigen Plattensegmente an den Rändern zu einem gedachten Kreis ergänzen, und dass die Flächen der bogenförmigen Plattensegmente eben ausgebildet sind, und dass die Platte und die bogenförmigen Plattensegmente zwischen sich großflächige Aussparungen umschließen, woraus neben einer Materialeinsparung insbesondere eine gute Verbindung des Befestigungselementes zu den unterschiedlichen Dämmmaterialien und zur Putzschicht resultiert.

In einer weiteren vorteilhaften Ausgestaltung der Erfindung sind die Bohrungen im Wesentlichen in dem geometrischen Mittelpunkt der bogenförmigen Plattensegmente zwecks einer verbesserten Aufnahme der äußeren Kräfte und deren Verteilung in dem zu befestigenden Dämmmaterial angeordnet und die bogenförmigen Plattensegmente derart ausgebildet, dass sich um die jeweilige Bohrung eine gleichmäßige Auflage für das zu befestigende Dämmmaterial ergibt.

Bevorzugt umschließen die Platte und die bogenförmigen Plattensegmente sattelförmige Aussparungen, die eine optimale Verankerung des Befestigungselementes in der Dämm- und Isolationsschicht ermöglichen.

Eine weitere vorteilhafte Ausgestaltung der Erfindung sieht vor, dass an der Platte eine Abdeckkappe angeordnet ist, und wobei die Platte und die Abdeckkappe zusammengreifende Halteelemente aufweisen, wodurch ein Verschließen der Bohrungen in der Platte bewirkt wird und die metallischen Befestigungsmittel vor eindringender Feuchtigkeit geschützt sind.

Dadurch, dass die Halteelemente mindestens einen Haltestift an dem einen Teil und mindestens eine Passöffnung an dem anderen Teil aufweisen, wobei der mindestens eine Haltestift in die mindestens eine Passöffnung eingreift, wird ein festes Verklemmen bzw. Verrasten von Abdeckkappe und Platte erreicht.

In Bezug auf den Transport sowie eine leicht handhabbare Montage hat sich von Vorteil erwiesen, wenn die Abdeckkappe mittels mindestens eines flexiblen Anbindungssteges an der Platte oder an einem bogenförmigen Platensegment befestigbar ist.

Die Erfindung schlägt vor, die Oberseite der Abdeckkappe mit einem stegförmigen und/oder nutförmigen Haftrand für eine mörtelgriffige Putzoberfläche zu versehen, und die Oberseite der Platte einen stegförmigen und/oder nutförmigen Mörtelanhaftrand für eine mörtelgriffige Oberfläche bzw. zwecks Verstärkung der Verbindung zwischen Platte und Putzschicht auszubilden.

Vorzugsweise ist die Geometrie der Abdeckkappe derart ausgebildet, dass die Abdeckkappe um jeweils 120 °C drehbar auf die Platte befestigbar ist.

In einer besonders vorteilhaften Ausführungsform sind die Unterseite der Platte und die Unterseite der bogenförmigen Plattensegmente zwecks Erreichen einer entsprechenden Vorspannung konkav nach unten ausgebildet, woraus eine verbesserte Fixierung und ein sicherer Halt der zu befestigenden Dämmmaterialien resultiert.

Nach einem weiteren Vorschlag der Erfindung sind die Platte und die bogenförmigen Plattensegmente einstückig auf Basis eines thermoplastischen Kunststoffes als Spritzgussteil hergestellt.

Die Erfindung soll nachfolgend anhand der Zeichnungen und an einem Ausführungsbeispiel näher beschrieben werden: Es zeigen:
- Figur 1: eine Draufsicht auf ein erfindungsgemäßes Befestigungselement
- Figur 2: eine Unteransicht gemäß Figur 1
- Figur 3a: eine Draufsicht auf ein erfindungsgemäßes Befestigungselement mit an einem bogenförmigen Plattensegment angeordneter Abdeckkappe
- Figur 3b: eine Draufsicht auf ein erfindungsgemäßes Befestigungselement nach Figur 1 mit einer aufgesteckten Abdeckkappe
- Figur 4: eine Seitenansicht nach Figur 3a
- Figur 5a: eine perspektivische Ansicht gemäß Figur 1 mit einem eingesteckten Befestigungsmittel
- Figur 5b: eine perspektivische Ansicht nach Figur 1 mit in einer Senkbohrung aufgenommenem Kopf eines Befestigungsmittels
- Figur 5c: eine perspektivische Ansicht nach Figur 3b
- Figur 6: eine Draufsicht auf eine weitere Ausführung eines erfindungsgemäßen Befestigungselementes
- Figur 7: eine Ansicht bezüglich der Verteilung der Kräfte F um die geometrische Mitte der bogenförmigen Plattensegmenten
- Figur 8: eine perspektivische Darstellung einer weiteren Ausführungsform eines erfindungsgemäßen Befestigungselementes

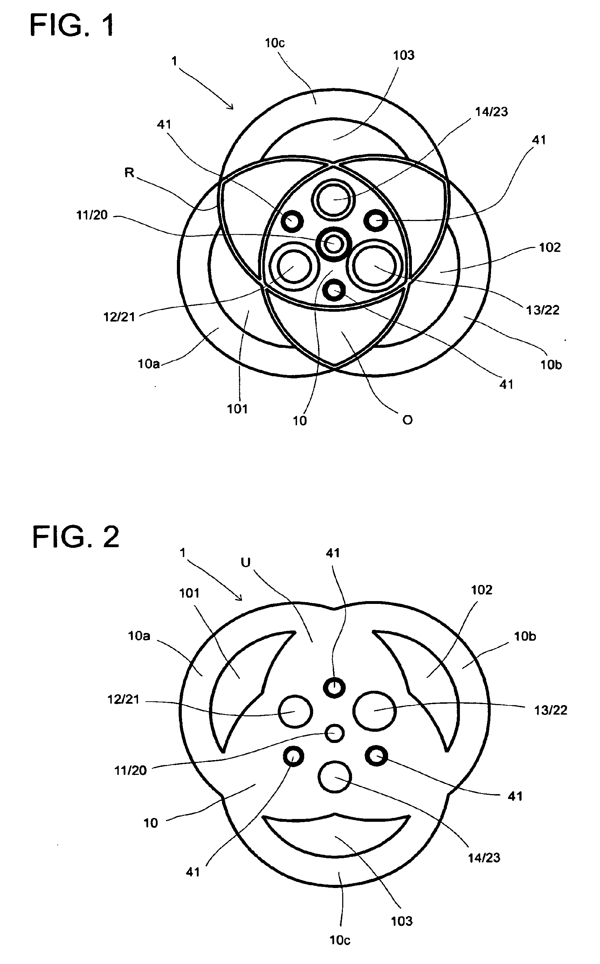

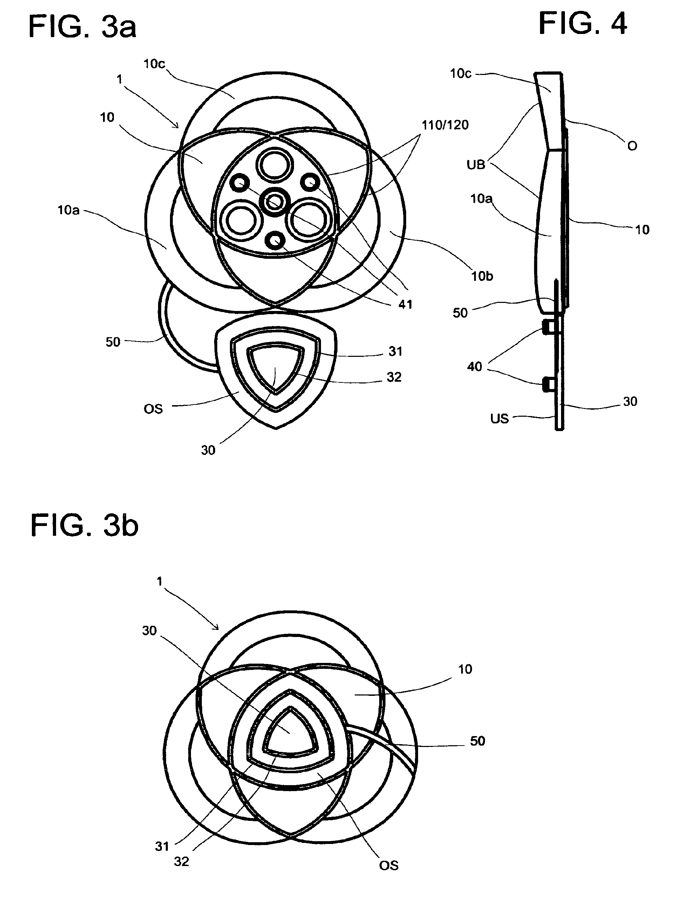

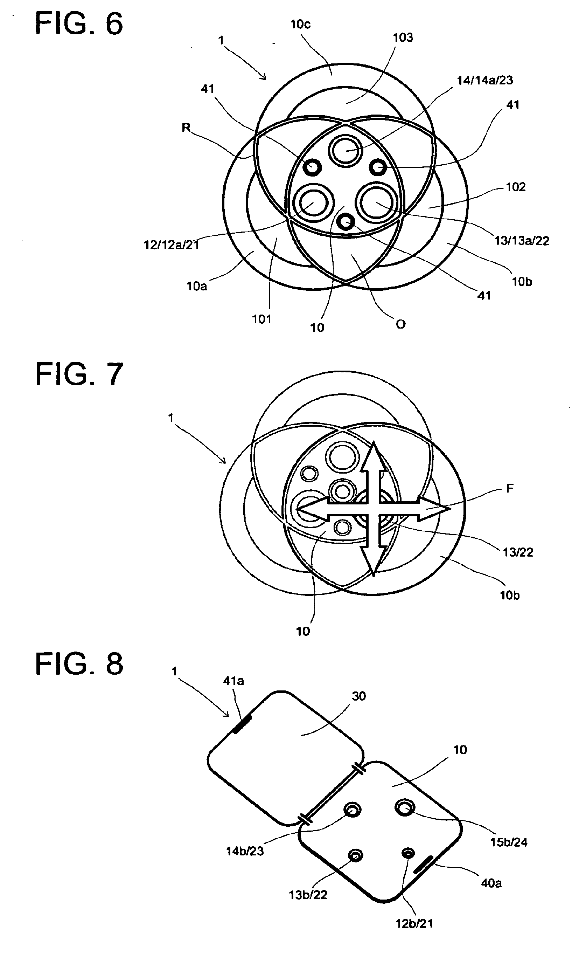

In den Figuren 1 bis 5c ist eine bevorzugte Ausführung des erfindungsgemäßen Befestigungselementes 1 dargestellt. Das Befestigungselement 1 umfasst eine Platte 10 mit drei bogenförmigen Plattensegmenten 10a, 10b, 10c. Die Platte 10 ist im Wesentlichen dreieckförmig ausgebildet, d.h. die Plattenform entspricht einem Dreieck nach Reuleauxes. Die Seiten der Platte 10 sind von den bogenförmigen Plattensegmenten 10a, 10b, 10c überspannt und die Ränder R der Platte 10 mit den bogenförmigen Plattensegmenten 10a, 10b, 10c ergänzen sich zu einem gedachten Kreis. Ferner umschließen die Platte 10 und die bogenförmigen Plattensegmente 10a, 10b, 10c zwischen sich drei großflächige sattelförmige Aussparungen 101, 102, 103, die neben einer Materialeinsparung insbesondere eine Verbindung des Befestigungselementes zu den unterschiedlichen Dämm- und Isoliermaterialien und zum Mörtel bzw. zur Putzschicht bewirken, d.h. den erforderlichen Haftverbund zwischen dem Dämmmaterial und der Putzschicht schaffen. Die bogenförmigen Plattensegmente 10a, 10b 10c dienen vordergründig einer gleichmäßigen Auflage um den Plattensegmentmittelpunkt und bewirken eine entsprechende Druckausübung auf das an einer Unterkonstruktion zu befestigende Dämmmaterial. In der Platte 10 sind vier Bohrungen 11, 12, 13, 14 mit unterschiedlichen Außen- und Innendurchmessern ausgebildet, die den Einsatz handelsüblicher Befestigungsmittel ermöglichen, d.h. die Bohrungen sind so dimensioniert, dass Befestigungsmittel unterschiedlicher Abmessungen und Ausführungen ein- bzw. durchführbar sind. Eine 11 der Bohrungen 11, 12, 13, 14 ist in der geometrischen Mitte der Platte 10 angeordnet. Die weiteren drei Bohrungen 12, 13, 14 sind um die in der geometrische Mitte der Platte 10 bzw. zentral angeordnete Bohrung 11 verteilt angeordnet und befinden sich im Wesentlichen in dem geometrischen Mittelpunkt der bogenförmigen Plattensegmente 10a, 10b, 10c. Die Anordnung der drei Bohrungen 12, 13, 14 außerhalb der geometrischen Mitte der Platte 10 bewirkt eine kreisförmige Verteilung der Kräfte (F) um die geometrische Mitte der bogenförmigen Plattensegmenten 10a, 10b, 10c (siehe Figur 8). Des Weiteren sind die Unterseite U der Platte 10 und die Unterseite UB der bogenförmigen Plattensegmente 10a, 10b 10c derart ausgebildet, dass sich um die jeweilige Bohrung 12, 13, 14 eine gleichmäßige Auflagefläche für das zu befestigende Material ergibt. Zur vollständigen Aufnahme der Befestigungsmittel 20, 21, 22, 23 sind die Bohrungen 11, 12, 13, 14 als Senkbohrungen ausgebildet. Ferner enthält die Platte 10 drei Passöffnungen 41, die auf einer gedachten Kreislinie in gleichen Winkelabständen angeordnet sind. Die Oberseite O der Platte 10 ist mit einem stegförmigen und/oder nutenförmigen Mörtelanhaftrand 110, 120 für eine mörtelgriffige Putzoberfläche versehen. Des Weiteren ist an einem bogenförmigen Plattensegment 10a, 10b, 10c eine Abdeckkappe 30 zum Verschließen der Bohrungen 11, 12, 13, 14 angeordnet. Die Abdeckkappe 30 weist an ihrer Unterseite US drei gleichmäßig voneinander beabstandete Haltestifte 40 auf, die in die drei Passöffnungen 41 der Platte 10 eingreifen und die Bohrungen 11, 12, 13, 14 in der Platte 10 gegen eindringende Feuchtigkeit fest und kontrollierbar verschließen. Dadurch, dass die Anzahl der Haltestifte 40 der Anzahl der Passöffnungen entspricht, ist eine optimale Verbindung der Abdeckkappe 30 mit der Platte 10 gegeben. Die Haltestifte 40 sind zylindrisch ausgebildet. Sie können auch pyramidenförmig oder prismatisch oder dreieckförmig oder in einer anderen geometrischen Form konstruiert sein. Die Abdeckkappe 30 ist mittels eines elastischen bzw. flexiblen Anbindungssteges 50 zur Auslieferung bzw. für den Transport mit der Platte 10 oder mit einem bogenförmigen Plattensegment 10a, 10b, 10c gemäß Figur 3a, Figur 3b verbunden. Darüber hinaus kann die Abdeckkappe 30 separat mitgeliefert werden. Die Ausbildung der Abdeckkappe 30 ermöglicht eine leichte Montage. Hierbei ist die Geometrie der Abdeckkappe 30 so gewählt, dass die Abdeckkappe 30 nicht zwingend in einer bestimmten Lage auf die Platte 10 aufgesteckt werden muss, sondern um jeweils 120° drehbar aufsteckbar ist. Ferner sind an der Oberseite OS der Abdeckkappe 30 zwei stegförmige und/oder nutenförmige Anhaftränder 31, 32 zur Verstärkung der Mörtelhaftung ausgebildet, d. h. Verstärkung der Haftung zwischen Putzschicht und Abdeckkappe. Um eine entsprechende Vorspannung aufbauen zu können, sind gemäß Figur 4 die Unterseite U der Platte 10 und die Unterseite UB der bogenförmigen Plattensegmente 10a, 10b, 10c konkav nach unten ausgebildet, womit eine verbesserte Fixierung erreichbar und ein sicherer Halt des zu befestigenden Materiales gegeben ist. Die Platte 10 mit den bogenförmigen Plattensegmenten 10a, 10b, 10c ist einstückig aus einem thermoplastischen Kunststoff im Spritzgussverfahren gefertigt. Hierbei wird bevorzugt ein hochfester thermoplastischer Kunststoff, der auch witterungsbeständig ist, wie zum Beispiel auf Basis von PP, PA eingesetzt. Die Platte 10 mit den bogenförmigen Plattensegmenten 10a, 10b, 10c kann vorzugsweise für den Inneneinsatz auch aus Metall gefertigt sein.

Die Platte 10 ist nicht an eine bestimmte Geometrie gebunden, d.h. der geometrischen Vielfalt sind keine Grenzen gesetzt, so dass die Platte 10 rechteckig oder kreisförmig oder trapezförmig und dergleichen gestaltet sein kann, was ebenfalls auf die Abdeckkappe 30 zutrifft (s. Figur 8). Wie aus der Figur 8 weiterhin ersichtlich, können die Halteelemente beispielsweise als Klebebänder 40a, 41 a ausgebildet sein.

Ferner kann die Abdeckkappe 30 sowohl für die Abdeckung einer einzelnen Bohrung 11 oder mehrerer Bohrungen 11 - 14; 12a - 14a ausgebildet sein.

Während die zentrale Bohrung 11 vorzugsweise zum Durchstecken einer Holz-oder Spanplattenschraube oder eines Nagels für eine Befestigung der Platte 10, beispielsweise an einer Holzwand, vorgesehen ist, dienen die um die zentrale Bohrung 11 angeordneten weiteren Bohrungen 12 - 14 der Aufnahme von unterschiedlich ausgebildeten Befestigungsmittelarten, wie Rahmendübel, Schraubendübel, Nageldübel, Schraube, Nagel in verschiedenen Durchmessern für verschiedene Untergründe.

Die Erfindung ist nicht auf die beschriebenen Ausführungsformen beschränkt. Für den Fachmann ergeben sich im Rahmen der Erfindung weitere Abwandlungs- und Modifizierungsmöglichkeiten.

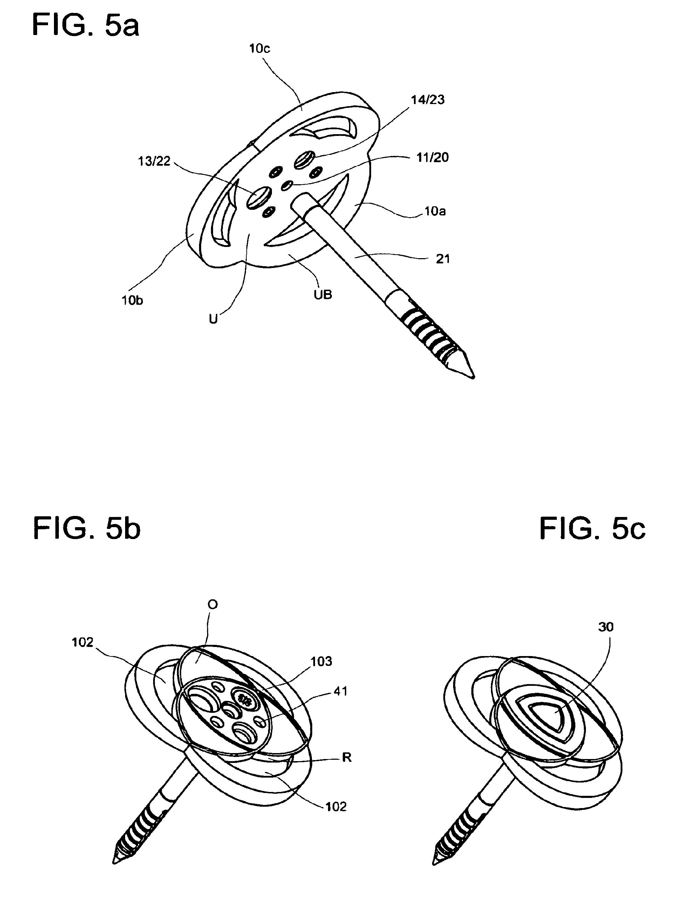

Zur Befestigung eines Dämmstoffes an einer Betonwand wird beispielsweise gemäß Figur 5a ein Dübel mit einer Schraube durch die Bohrung 12 der Platte 10 in eine vorbereitete Bohrung der Betonwand (nicht gezeichnet) gesteckt und von der Schraube auseinander gedrückt und somit zugfest in der Betonwand verankert.

Das Befestigungselement 1 ist sowohl als Dämmstoffhalter und Träger für Putzfassaden als auch zur Befestigung von Drahtgeweben, Folien und dergleichen an einem spezifischen Untergrund einsetzbar. Je nach Untergrund bzw. Unterkonstruktion wird ein spezifisch ausgebildetes Befestigungsmittel 20, 21, 22, 23 ausgewählt und in die entsprechende Bohrung 11, 12, 13, 14 der Platte 10 eingesetzt bzw. durch die Bohrung hindurch geführt. Das Befestigungselement 1 trägt somit dem Einsatz der vielfältig ausgebildeten Befestigungsmittel Rechnung.

### Bezugszeichen

- 1: = Befestigungselement
- 10: = Platte
- 10a, 10b, 10c: = bogenförmige Plattensegmente
- 11, 12, 13, 14: = Bohrungen
- 101, 102, 103: = Aussparungen
- 110/120: = stegförmiger / nutenförmiger Mörtelanhaftrand
- 20, 21, 22, 23, 24: = Befestigungsmittel
- 30: = Abdeckkappe
- 31/32: = stegförmiger / nutenförmiger Anhaftrand
- 40, 41: = Halteelemente
- 40: = Haltestift
- 41: = Passöffnung
- 40a, 41 a: = Klebebänder
- 50: = Anbindungssteg
- O: = Oberseite von 10
- U: = Unterseite von 10
- R: = Rand von 10
- F: = Kraft
- US: = Unterseite von 30
- OS: = Oberseite von 30
- UB: = Unterseite von 10a, 10b, 10c

## Patentansprüche

1. Befestigungselement (1), insbesondere zum Befestigen von wärme- und/oder schallisolierenden Dämmmaterialien und Dichtungsbahnen, Folien und Gittergeweben an einer Unterkonstruktion wie Mauerwerk, Beton, Holz, Metall, Kunststoff, umfassend eine Platte und ein Befestigungsmittel wie Schraube, Nagel, Dübel und dergleichen, und wobei die Platte mittels des Befestigungsmittels an einem Untergrund befestigbar ist,
**dadurch gekennzeichnet, dass**
die Platte (10) Bohrungen (11 - 14; 12a - 14a; 12b - 15b) unterschiedlicher Größen und/oder Formen für die Aufnahme bzw. zum Durchführen unterschiedlicher Befestigungsmittelarten (20 - 24) enthält, wobei die Platte (10) im Wesentlichen dreieckförmig ausgebildet ist, und die Seiten der Platte (10) von bogenförmigen Plattensegmenten (10a, 10b, 10c) überspannt sind, die sich an den Rändern zu einem gedachten Kreis ergänzen, und dass die Flächen der bogenförmigen Plattensegmente (10a, 10b, 10c) eben ausgebildet sind, und dass die Platte (10) und die bogenförmigen Plattensegmente (10a, 10b, 10c) zwischen sich großflächige Aussparungen (101, 102, 103) umschließen..

2. Befestigungselement (1) nach Anspruch 1,
**dadurch gekennzeichnet, dass**
eine (11) der Bohrungen (11 - 14) in der geometrischen Mitte der Platte (10) angeordnet ist, und dass weitere Bohrungen (12 - 14) um die in der geometrischen Mitte der Platte (10) angeordnete Bohrung (11) verteilt angeordnet sind.

3. Befestigungselement (1) nach Anspruch 1 oder 2,
**dadurch gekennzeichnet, dass**
die Bohrungen (12 - 14; 12a - 14a; 12b - 15b) auf einer Kreislinie angeordnet sind, und wobei die Bohrungen (12 - 14; 12a - 14a; 12b - 15b) im Wesentlichen um den geometrischen Mittelpunkt der Platte (10) verteilt angeordnet sind.

4. Befestigungselement (1) nach einem der Ansprüche 1 bis 3,
**dadurch gekennzeichnet, dass**
die Bohrungen (11 - 14; 12a - 14a; 12b - 15b) als Senkbohrungen ausgebildet sind.

5. Befestigungselement (1) nach einem der Ansprüche 1 bis 4,
**dadurch gekennzeichnet, dass**
die Unterseite (U) der Platte (10) im Wesentlichen eben zwecks eines ebenen Abschlusses mit dem Dämmmaterial ausgebildet ist.

6. Befestigungselement (1) nach einem der Ansprüche 1 bis 5,
**dadurch gekennzeichnet, dass**
die Bohrungen (12 - 14; 12a - 14a) im Wesentlichen in dem geometrischen Mittelpunkt der bogenförmigen Plattensegmente (10a, 10b, 10c) angeordnet sind, und dass die bogenförmigen Plattensegmente (10a, 10b, 10c) derart ausgebildet sind, dass sich um die jeweilige Bohrung (12 - 14; 12a - 14a) eine gleichmäßige Auflage für das zu befestigende Dämmmaterial ergibt.

7. Befestigungselement (1) nach einem der Ansprüche 1 bis 6,
**dadurch gekennzeichnet, dass**
die Platte (10) und die bogenförmigen Plattensegmente (10a, 10b, 10c) sattelförmige Aussparungen (101, 102, 103) umschließen.

8. Befestigungselement (1) nach einem der Ansprüche 1 bis 7,
**dadurch gekennzeichnet, dass**
an der Platte (10) eine Abdeckkappe (30) angeordnet ist, und dass die Platte (10) und die Abdeckkappe (30) zusammengreifende Halteelemente (40, 41, 40a, 41 a) aufweisen.

9. Befestigungselement (1) nach Anspruch 8,
**dadurch gekennzeichnet, dass**
die Halteelemente (40, 41) mindestens einen Haltestift (40) an dem einen Teil (30) und mindestens eine Passöffnung (41) an dem anderen Teil (10) aufweisen, und wobei der mindestens eine Haltestift (40) in die mindestens eine Passöffnung (41) eingreift.

10. Befestigungselement (1) nach einem der Ansprüche 1 bis 9,
**dadurch gekennzeichnet, dass**
die Platte (10) drei Passöffnungen (41) aufweist, die auf einer gedachten Kreislinie in gleichen Winkelabständen angeordnet sind.

11. Befestigungselement (1) nach einem der Ansprüche 9 bis 10,
**dadurch gekennzeichnet, dass**
die Abdeckkappe (30) mittels mindestens eines flexiblen Anbindungssteges (50) an der Platte (10) oder an einem bogenförmigen Plattensegment (10a, 10b, 10c) befestigbar ist.

12. Befestigungselement (1) nach einem der Ansprüche 9 bis 11,
**dadurch gekennzeichnet, dass**
die Oberseite (OS) der Abdeckkappe (30) mit einem stegförmigen und/oder nutförmigen Haftrand (31, 32) für eine mörtelgriffige Putzoberfläche versehen ist, und dass die Oberseite (O) der Platte (10) einen stegförmigen und/oder nutförmigen Mörtelanhaftrand (110, 120) für eine mörtelgriffige Oberfläche aufweist.

13. Befestigungselement (1) nach einem der Ansprüche 9 bis 12,
**dadurch gekennzeichnet, dass**
die Geometrie der Abdeckkappe (30) derart ausgebildet ist, dass die Abdeckkappe (30) um jeweils 120°drehbar auf die Platte (10) befestigbar ist.

14. Befestigungselement (1) nach einem der Ansprüche 1 bis 13,
**dadurch gekennzeichnet, dass**
die Platte (10) konkav nach unten ausgebildet ist.

15. Befestigungselement (1) nach einem der Ansprüche 1 bis 14,
**dadurch gekennzeichnet, dass**
die Platte (10) und die bogenförmigen Plattensegmente (10a, 10b 10c) einstückig auf Basis eines thermoplastischen Kunststoffes als Spritzgussteil hergestellt sind.

## Claims

1. Fastening element (1), in particular for fastening heat- and/or sound-insulating damping materials and sealing strips, foils and fabric meshes at a substructure, such as masonry, concrete, wood, metal, plastics, comprising a plate and a fastening member, such as a screw, nail, dowel and the like, and wherein the plate can be fastened at an underground by means of the fastening member,
**characterized in that**
the plate (10) comprises bores (11-14; 12a-14a; 12b-15b) of different sizes and/or shapes for receiving, respectively for passage of different types of fastening members (20-24), wherein the plate (10) is designed essentially with a triangular shape, and the sides of the plate (10) are straddled by arcuate plate segments (10a, 10b, 10c) which at the edges are extended to form an imaginary circle and the surfaces of the arcuate plate segments (10a, 10b, 10c) are designed planarly, and the plate (10) and the arcuate plate segments (10a, 10b, 10c) enclose largely dimensioned recesses (101, 102, 103) between them.

2. Fastening element (1) according to claim 1,
**characterized in that**
one bore (11) among the bores (11-14) is arranged in the geometrical center of the plate (10), and further bores (12-14) are arranged so as to be distributed around the bore (11) which is arranged in the geometrical center of the plate (11).

3. Fastening element (1) according to claim 1 or 2,
**characterized in that**
the bores (12-14; 12a-14a; 12b-15b) are arranged on a circular line, and wherein the bores (12-14; 12a-14a; 12b-15b) are arranged so as to be essentially distributed around the geometrical center of the plate (10).

4. Fastening element (1) according to any of claims 1 to 3,
**characterized in that**
the bores (11-14; 12a-14a; 12b-15b) are designed as counterbores.

5. Fastening element (1) according to any of claims 1 to 4,
**characterized in that**
the lower side (U) of the plate (10) is designed essentially planarly for the purpose of creating a planar closing-off with the damping material.

6. Fastening element (1) according to any of claims 1 to 5,
**characterized in that**
the bores (12-14; 12a-14a) are arranged substantially in the geometrical center of the arcuate plate segments (10a, 10b, 10c) and the arcuate plate segments (10a, 10b, 10c) are designed such that a planar support for the damping material to be fastened is created around the respective bore (12-14; 12a-14a).

7. Fastening element (1) according to any of claims 1 to 6,
**characterized in that**
the plate (10) and the arcuate plate segments (10a, 10b, 10c) enclose saddle-shaped recesses (101, 102, 103).

8. Fastening element (1) according to any of claims 1 to 7,
**characterized in that**
a cover cap (30) is disposed at the plate (10) and the plate (10) and the cover cap (30) have engaging retaining elements (40, 41, 40a, 41 a).

9. Fastening element (1) according to claim 8,
**characterized in that**
the retaining elements (40, 41) have at least one retaining pin (40) at the one part (30) and at least one passage opening (41) at the other part (10), and wherein the at least one retaining pin (40) engages into the at least one passage opening (41).

10. Fastening element (1) according to any of claims 1 to 9,
**characterized in that**
the plate (10) has three passage openings (41) which are arranged on an imaginary circular line at like angular distances.

11. Fastening element (1) according to any of claims 9 to 10,
**characterized in that**
the cover cap (30) can be fastened at the plate (10) or at an arcuate plate segment (10a, 10b, 10c) via at least one flexible connection web (50).

12. Fastening element (1) according to any of claims 9 to 11,
**characterized in that**
the upper side (OS) of the cover cap (30) is equipped with a web-shaped and/or a groove-shaped fixing edge (31, 32) for creating a mortar-gripping plaster surface, and the upper side (O) of the plate (10) has a web-shaped and/or groove-shaped mortar-fixing edge (110, 120) for creating a mortar-gripping surface.

13. Fastening element (1) according to any of claims 9 to 12,
**characterized in that**
the geometry of the cover cap (30) is designed such that the cover cap (30) can be fastened onto the plate (10) so as to be rotatable by respectively 120°.

14. Fastening element (1) according to any of claims 1 to 13,
**characterized in that**
the plate (10) has a concave downwardly directed shape.

15. Fastening element (1) according to any of claims 1 to 14,
**characterized in that**
the plate (10) and the arcuate plate segments (10a, 10b, 10c) are manufactured integrally on the basis of a thermoplastic material in the form of an injection-molded part.

## Revendications

1. Élément de fixation (1), en particulier pour la fixation des matériaux d'amortissement et des bandes d'étanchéité, des feuilles et des tissus à mailles destinés à l'isolation thermique et/ou à l'isolation acoustique à une sous-structure, tel que la maçonnerie, le béton, le bois, le métal, la pastique, comprenant une plaque et un membre de fixation, tel qu'une vis, un clou, une cheville et similaires, et dans lequel la plaque peut être fixée à un souterrain au moyen du membre de fixation,
**caractérisé en ce que**
la plaque (10) comprend des alésages (11-14; 12a-14a; 12b-15b) de différentes tailles et/ou formes pour le logement, respectivement pour le passage de différentes types de membres de fixation (20-24), dans lequel la plaque (10) est conçue sensiblement en forme triangulaire et les côtés de la plaque (10) sont chevauchés par des segments de plaque arqués (10a, 10b, 10c) étant, au niveau des bords de ceux-ci, élargis pour former un cercle imaginaire, et les surfaces des segments de plaque arqués (10a, 10b, 10c) sont conçues de forme planaire, et la plaque (10) et les segments de plaque arqués (10a, 10b, 10c) enferment entre eux des évidements (101, 102, 103) largement dimensionnés.

2. Élément de fixation (1) selon la revendication 1,
**caractérisé en ce qu'**
une alésage (11) parmi les alésages (11-14) est agencée dans le centre géométrique de la plaque (10), et d'autres alésages (12-14) sont agencées de telle manière que celles-ci (11) soient reparties autour de l'alésage (11) qui est agencée dans le centre géométrique de la plaque (11).

3. Élément de fixation (1) selon l'une quelconque des revendications 1 ou 2,
**caractérisé en ce que**
les alésages (12-14; 12a-14a; 12b-15b) sont agencées sur une ligne circulaire, et dans lequel les alésages (12-14; 12a-14a; 12b-15b) sont agencées de telle manière que celles-ci soient reparties sensiblement autour du centre géométrique de la plaque (10).

4. Élément de fixation (1) selon l'une quelconque des revendications 1 à 3,
**caractérisé en ce que**
les alésages (11-14; 12a-14a; 12b-15b) sont façonnées en tant que contre-alésages.

5. Élément de fixation (1) selon l'une quelconque des revendications 1 à 4,
**caractérisé en ce que**
la surface inférieure (U) de la plaque (10) est conçue sensiblement en forme planaire aux fins de la réalisation d'une terminaison planaire vis-à-vis le matériau d'amortissement.

6. Élément de fixation (1) selon l'une quelconque des revendications 1 à 5,
**caractérisé en ce que**
les alésages (12-14; 12a-14a) sont agencées sensiblement dans le centre géométrique des segments de plaque arqués (10a, 10b, 10c) et lesdits segments de plaque arqués (10a, 10b, 10c) sont conçus de telle manière qu'un support planaire pour le matériau d'amortissement à fixer est réalisée autour de l'alésage (12-14; 12a-14a) correspondante.

7. Élément de fixation (1) selon l'une quelconque des revendications 1 à 6,
**caractérisé en ce que**
la plaque (10) et les segments de plaque arqués (10a, 10b, 10c) enferment des évidements (101, 102, 103) en forme de selle.

8. Élément de fixation (1) selon l'une quelconque des revendications 1 à 7,
**caractérisé en ce qu'**
un capuchon (30) est prévu au niveau de la plaque (10) et la plaque (10) et le capuchon (30) présentent des éléments de retenue (40, 41, 40a, 41 a) de venue en prise.

9. Élément de fixation (1) selon la revendication 8,
**caractérisé en ce que**
les éléments de retenue (40, 41) présentent au moins une goupille de retenue (40) à une partie (30) et au moins une ouverture de passage (41) à l'autre partie (10), et dans lequel l'au moins une goupille de retenue (40) vient en prise dans l'au moins une ouverture de passage (41).

10. Élément de fixation (1) selon l'une quelconque des revendications 1 à 9,
**caractérisé en ce que**
la plaque (10) présente trois ouvertures de passage (41) étant agencées sur une ligne imaginaire circulaire à des distances angulaires égales.

11. Élément de fixation (1) selon l'une quelconque des revendications 9 à 10,
**caractérisé en ce que**
le capuchon (30) peut être fixé à la plaque (10) ou à un segment de plaque arqué (10a, 10b, 10c) à l'aide d'au moins une entretoise de liaison (50) flexible.

12. Élément de fixation (1) selon l'une quelconque des revendications 9 à 11,
**caractérisé en ce que**
la surface supérieure (OS) du capuchon (30) est munie d'un bord de fixation (31, 32) conçu en forme d'entretoise et/ ou en forme de rainure pour réaliser une surface d'enduit mortier-agrippante, et la surface supérieure (O) de la plaque (10) présente un bord (110, 120) mortier-fixant en forme d'entretoise et/ou en forme de rainure pour réaliser une surface mortier-agrippante.

13. Élément de fixation (1) selon l'une quelconque des revendications 9 à 12,
**caractérisé en ce que**
la géométrie du capuchon (30) est conçue de telle manière que le capuchon (30) puisse être fixé sur la plaque (10) en étant rotable respectivement par 120°.

14. Élément de fixation (1) selon l'une quelconque des revendications 1 à 13,
**caractérisé en ce que**
la plaque (10) présente une forme concave dirigée vers le bas.

15. Élément de fixation (1) selon l'une quelconque des revendications 1 à 14,
**caractérisé en ce que**
la plaque (10) et les segments de plaque arqués (10a, 10b, 10c) sont réalisés intégralement sur la base d'un matériau thermoplastique sous forme de pièce moulée par injection.
